# EUROPEAN PATENT APPLICATION

(11) **EP 4 358 322 A1**
(43) Date of publication of application: **24.04.2024**
(21) Application number: 22845630.7
(22) Date of filing: 16.03.2022
(51) Int. Cl.: H01S 3/00, H01S 3/067, H01S 3/10, G02F 1/365

(54) **LIGHT SOURCE DEVICE**

(30) Priority: 21.07.2021 JP 2021120280
(71) Applicant: Hamamatsu Photonics K.K., Hamamatsu-shi, Shizuoka 435-8558 (JP)
(72) Inventor: SHIMOMAKI, Masaru, Hamamatsu-shi, Shizuoka 435-8558 (JP); KATO, Shin, Hamamatsu-shi, Shizuoka 435-8558 (JP); SUZUKI, Yasutaka, Hamamatsu-shi, Shizuoka 435-8558 (JP)
(74) Representative: Grünecker Patent- und Rechtsanwälte PartG mbB
(86) International application number: PCT/JP2022/011990
(87) International publication number: WO 2023/002690

(57) **Abstract**

A light source device includes: a fiber laser including an excitation light source and configured to output pulsed light generated according to excitation light from the excitation light source; a fiber amplifier configured to receive the pulsed light output from the fiber laser, amplify the pulsed light, and output the amplified pulsed light; a wavelength shift fiber configured to receive the pulsed light output from the fiber amplifier, shift a wavelength of the pulsed light, and output the pulsed light; an output fiber configured to receive the pulsed light output from the wavelength shift fiber, and output the pulsed light to an outside; a light detection element configured to detect, in the output fiber, the pulsed light having passed through at least the wavelength shift fiber; and a control unit configured to control a drive current of the excitation light source.

## Description

### Technical Field

The present disclosure relates to a light source device.

### Background Art

Patent Literature 1 discloses a super continuum light source. The light source includes a fiber laser, a fiber amplifier, a wavelength shift fiber, and a highly non-linear optical fiber. The fiber amplifier includes a polarization-maintaining EDF, a polarization-maintaining optical coupler, and an excitation light source. The excitation light source is a laser diode that outputs excitation light. The excitation light from the excitation light source is input to the EDF via the optical coupler.

### Citation List

### Patent Literature

Patent Literature 1: Japanese Unexamined Patent Publication No. 2017-67804

### Summary of Invention

### Technical Problem

In the light source described in Patent Literature 1, a part of super continuum light from the highly non-linear optical fiber is branched by the optical coupler and input to a spectrum measurement device. The spectrum measurement device measures a spectrum of the super continuum light, that is, an intensity distribution for each wavelength. As a result, in this light source, the intensity of the excitation light of the fiber amplifier is feedback-controlled by the intensity of the super continuum light, thereby stabilizing the output and spectrum of the super continuum light. As described above, in the above technical field, there is a demand for stabilization of the output light. However, in the light source of Patent Literature 1, an excitation light source is also provided in the fiber laser, but feedback control thereof is not mentioned.

Meanwhile, there is a case where a carbon nanotube sheet (CNT sheet) is provided as a saturable absorber in the fiber laser of the light source. The CNT sheet has a lifetime and needs to be replaced. According to the present inventors, currently, studies on enabling a unit including the CNT sheet to be replaced on a user side are in progress.

However, since there are variations in an LD current value at which a mode lock occurs for each CNT sheet, in order to cause the mode lock in a case where the CNT sheet is replaced, for example, it is necessary to adjust the LD current value while measuring the spectrum of the output light as in the super continuum light source. However, for this purpose, an expensive device such as a spectrum analyzer is required, and it is difficult for the user side to perform this.

Therefore, an object of the present disclosure is to provide a light source device capable of adjusting an excitation light source so that a mode lock occurs without measuring a spectrum.

### Solution to Problem

Alight source device according to the present disclosure includes: a fiber laser including an excitation light source and configured to output pulsed light generated according to excitation light from the excitation light source; a fiber amplifier configured to receive the pulsed light output from the fiber laser, amplify the pulsed light, and output the amplified pulsed light; a wavelength shift fiber configured to receive the pulsed light output from the fiber amplifier, shift a wavelength of the pulsed light, and output the pulsed light; an output fiber configured to receive the pulsed light output from the wavelength shift fiber, and output the pulsed light to an outside; a light detection element configured to detect, in the output fiber, the pulsed light having passed through at least the wavelength shift fiber; and a control unit configured to control a drive current of the excitation light source, in which the light detection element detects light in a partial wavelength band of the pulsed light having passed through the wavelength shift fiber, and the control unit executes, by changing the drive current of the excitation light source in one direction according to an output value of the light detection element, acquisition processing of acquiring a specified current value of the drive current at which the output value of the light detection element is greater than or equal to a specified value.

In this light source device, the pulsed light generated according to excitation light from the excitation light source is output from the fiber laser, amplified by the fiber amplifier, and then input to the wavelength shift fiber. The pulsed light input to the wavelength shift fiber is output from the output fiber after being subjected to the wavelength shift. Therefore, it is also conceivable to adjust the drive current of the excitation light source so that the mode lock occurs while measuring the spectrum of the light output from the output fiber. However, the measurement of the spectrum is not necessarily easy.

On the other hand, in this light source device, the light detection element for detecting the pulsed light having passed through at least the wavelength shift fiber detects the light in the partial wavelength band of the pulsed light having passed through the wavelength shift fiber. Therefore, in the light detection element, an output signal according to the light in the partial wavelength band of the light subjected to the wavelength shift is generated. In a case where the entire spectrum of the light is input, the output signal of the light detection element does not change depending on whether or not the mode lock occurs in the fiber laser, but changes depending on whether or not the mode lock occurs in the fiber laser when limited to the partial wavelength band. Therefore, the control unit can execute acquisition processing of changing the drive current of the excitation light source according to the output value of the light detection element and acquiring the specified current value of the excitation light source at which the output value of the light detection element is greater than or equal to a specified value. As a result, it is possible to cause the mode lock in the fiber laser by driving the excitation light source at the specified current value. As described above, according to the light source device, the excitation light source can be adjusted so that the mode lock occurs without measuring the spectrum.

In the light source device according to the present disclosure, the light in the partial wavelength band may include a wavelength component caused by a wavelength band generated in the pulsed light by passing through the wavelength shift fiber. As described above, the intensity of the light in the partial wavelength band generated in the wavelength shift fiber is likely to change depending on whether or not the mode lock occurs. Therefore, by detecting the light of the wavelength component caused by the wavelength band by the light detection element, it is possible to more reliably acquire the specified current value of the excitation light source in which the mode lock occurs.

In the light source device according to the present disclosure, after the acquisition processing, the control unit may execute setting processing of further changing the drive current of the excitation light source from the specified current value in the one direction and setting the drive current as the drive current of the excitation light source. In this case, the mode lock can be more stably generated in the fiber laser.

In the light source device according to the present disclosure, in the acquisition processing, the control unit may change the drive current of the excitation light source so as to increase the drive current from a lower limit value according to the output value of the light detection element. In this case, driving of the excitation light source with an unnecessarily large drive current can be avoided. As a result, in a case where the fiber laser includes, for example, a CNT sheet, wear of the CNT sheet is suppressed.

In the light source device according to the present disclosure, the light detection element may be disposed to detect the pulsed light output from the output fiber. In this case, the light source device may include a filter provided between the wavelength shift fiber and the light detection element so that the light in the partial wavelength band of the pulsed light having passed through the wavelength shift fiber enters the light detection element, in which the output fiber may include a non-linear fiber, and the filter may include a short-pass filter provided between the non-linear fiber and the light detection element so that the light in the partial wavelength band on a short wavelength side of the pulsed light having passed through the non-linear fiber enters the light detection element. As described above, in the light having passed through the non-linear fiber, the intensity of the light in the partial wavelength band on the short wavelength side is likely to change depending on whether or not the mode lock occurs in the fiber laser. Therefore, in this case, it is possible to easily and reliably determine whether or not the mode lock occurs and to more reliably acquire the specified current value of the excitation light source by detecting a part of the light on the short wavelength side having passed through the non-linear fiber with the light detection element via the short-pass filter.

In the light source device according to the present disclosure, the light detection element may be disposed to detect the pulsed light input to the output fiber. In this case, the light source device may include a filter provided between the wavelength shift fiber and the light detection element so that the light in the partial wavelength band of the pulsed light having passed through the wavelength shift fiber enters the light detection element, in which the filter may include a long-pass filter provided between the wavelength shift fiber and the light detection element so that the light in the partial wavelength band on a long wavelength side of the pulsed light having passed through the wavelength shift fiber enters the light detection element. As described above, in the light before being input to the output fiber via the wavelength shift fiber, depending on whether or not the mode lock occurs in the fiber laser, the intensity of the light in the partial wavelength band on the long wavelength side is likely to change. Therefore, in this case, by detecting a part of the light on the long wavelength side having passed through the wavelength shift fiber with the light detection element via the long-pass filter, it is possible to easily and reliably determine whether or not the mode lock occurs and to more reliably acquire the specified current value of the excitation light source.

### Advantageous Effects of Invention

According to the present disclosure, it is possible to provide a light source device capable of adjusting an excitation light source so that a mode lock occurs without measuring a spectrum.

### Brief Description of Drawings

FIG. 1 is a schematic diagram illustrating a light source device according to a first embodiment.
FIG. 2 is a schematic diagram illustrating a fiber laser illustrated in FIG. 1.
FIG. 3 is a diagram illustrating an example of a spectrum of light having passed through a highly non-linear fiber.
FIG. 4 is a flowchart illustrating one step of a drive current adjustment method according to the present embodiment.
FIG. 5 is a diagram illustrating an example of a spectrum of light having passed through a wavelength shift fiber.
FIG. 6 is a schematic diagram illustrating a light source device according to a second embodiment.
FIG. 7 is a schematic diagram illustrating a light source device according to a third embodiment.
FIG. 8 is a schematic diagram illustrating a light source device according to a fourth embodiment.

### Description of Embodiments

Hereinafter, light source devices according to embodiments will be described with reference to the drawings. Note that, in the description of each drawing, the same or corresponding elements are denoted by the same reference signs, and redundant description may be omitted.

### [First Embodiment]

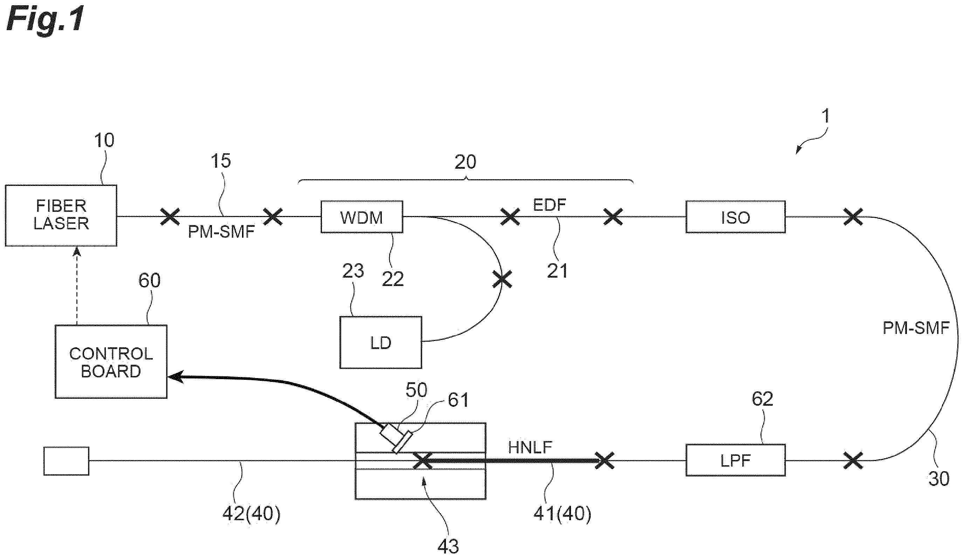

FIG. 1 is a schematic diagram illustrating a light source device according to a first embodiment. A light source device 1 illustrated in FIG. 1 is a broadband spectrum light source, and is, for example, a super continuum light source that outputs super continuum light. The light source device 1 includes a fiber laser 10, a fiber amplifier 20, a wavelength shift fiber 30, an output fiber 40, a light detection element 50, and a control unit 60.

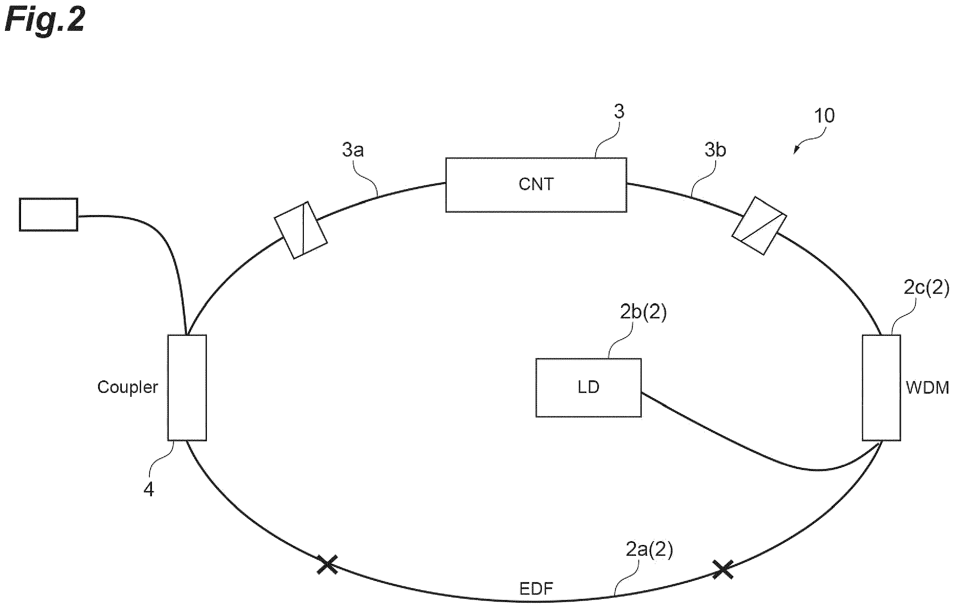

FIG. 2 is a schematic diagram illustrating the fiber laser illustrated in FIG. 1. As illustrated in FIG. 2, the fiber laser 10 is a ring-type laser oscillator. The fiber laser 10 is an ultrashort pulse (femtosecond) laser device, and includes a fiber amplifier 2 and a saturable absorber 3. The fiber amplifier 2 includes an amplification fiber 2a, an excitation light source 2b, and an optical coupler 2c. The amplification fiber 2a is, for example, an erbium-doped fiber (EDF) in which erbium is added to a core. The excitation light source 2b is, for example, a laser diode (LD), and outputs continuous light as excitation light for exciting the amplification fiber. The optical coupler 2c is, for example, a wavelength division multiplexing optical coupler (WDM optical coupler). The excitation light (continuous light) output from the excitation light source 2b is input to the amplification fiber 2a via the optical coupler 2c and circulates in one direction.

The saturable absorber 3 includes, for example, carbon nanotubes. The saturable absorber 3 is a material whose light transparency changes depending on incident light intensity. The saturable absorber 3 includes a sheet-like resin material and a plurality of carbon nanotubes dispersed in the resin material. As the resin material, a material having excellent heat resistance is used. The carbon nanotube absorbs light in a 1560 nm band, and has saturable absorption properties in which the absorption decreases when the incident light intensity reaches a high level. The saturable absorber 3 is held on a butted end face of an optical fiber 3a and an optical fiber 3b.

Light from the amplification fiber 2a enters the saturable absorber 3 via an optical coupler 4 and the optical fiber 3a. The saturable absorber 3 absorbs the incident light in a linear region where the incident light intensity is weak. In the saturable absorber 3, when the incident light intensity reaches a high level, absorption decreases, and the incident light is transmitted through the saturable absorber 3. Since an amplitude of oscillating laser light temporally varies at a high frequency due to a noise component, light at a high level of incident light intensity is transmitted without being absorbed by the saturable absorber 3, and becomes pulsed light.

In the fiber laser 10, the pulsed light is superimposed on circulating continuous light, stimulated emission is promoted, the intensity increases, and further, the pulsed light easily transmits through the saturable absorber 3. While the pulsed light circulates while growing in this manner, the pulsed light is generated by the saturable absorption properties of the saturable absorber 3, a fiber non-linear effect, and a wavelength dispersion effect. The generated pulsed light is partially output from the fiber laser 10 via the optical coupler 4. As described above, the fiber laser 10 includes the excitation light source 2b and outputs the pulsed light generated according to the excitation light from the excitation light source 2b.

As illustrated in FIG. 1, the pulsed light output from the fiber laser 10 is input to the fiber amplifier 20 via the optical fiber 15. The optical fiber 15 is, for example, a polarization-maintaining single mode fiber (PM-SMF), and is for, for example, expanding a pulse width of the pulsed light from the fiber laser 10 to shape a waveform.

The fiber amplifier 20 includes an amplification fiber 21, an optical coupler 22, and an excitation light source 23. The amplification fiber 21 is, for example, an erbium-doped fiber (EDF) in which erbium is added to a core. The optical coupler 22 is, for example, a wavelength division multiplexing optical coupler (WDM optical coupler). The excitation light source 23 is, for example, a laser diode, and outputs excitation light for exciting the amplification fiber 21. The excitation light from the excitation light source 23 is combined with the pulsed light from the optical fiber 15 (from the fiber laser 10) in the optical coupler 22 and input to the amplification fiber 21. As a result, the pulsed light is amplified in the amplification fiber 21. As described above, the fiber amplifier 20 receives the pulsed light output from the fiber laser 10, and amplifies and outputs the pulsed light.

The pulsed light output from the fiber amplifier 20 is input to the wavelength shift fiber 30 via an optical isolator 16. The wavelength shift fiber is, for example, a polarization-maintaining single mode fiber (PM-SMF). The wavelength shift fiber 30 shifts and outputs a wavelength of the pulsed light output from the fiber amplifier 20.

The pulsed light output from the wavelength shift fiber 30 is input to the output fiber 40. The output fiber 40 is for outputting pulsed light to the outside. In the present embodiment, the output fiber 40 includes a highly non-linear fiber (non-linear fiber, HNLF) 41 and an optical fiber 42 connected to the highly non-linear fiber 41. The highly non-linear fiber 41 and the optical fiber 42 are connected by fusion splicing to form a fusion splice portion 43. The pulsed light from the wavelength shift fiber 30 is input to the highly non-linear fiber 41, and a spectral width of the pulsed light is extended by the non-linear optical effect. As a result, super continuum light having a broadband spectrum is generated and output.

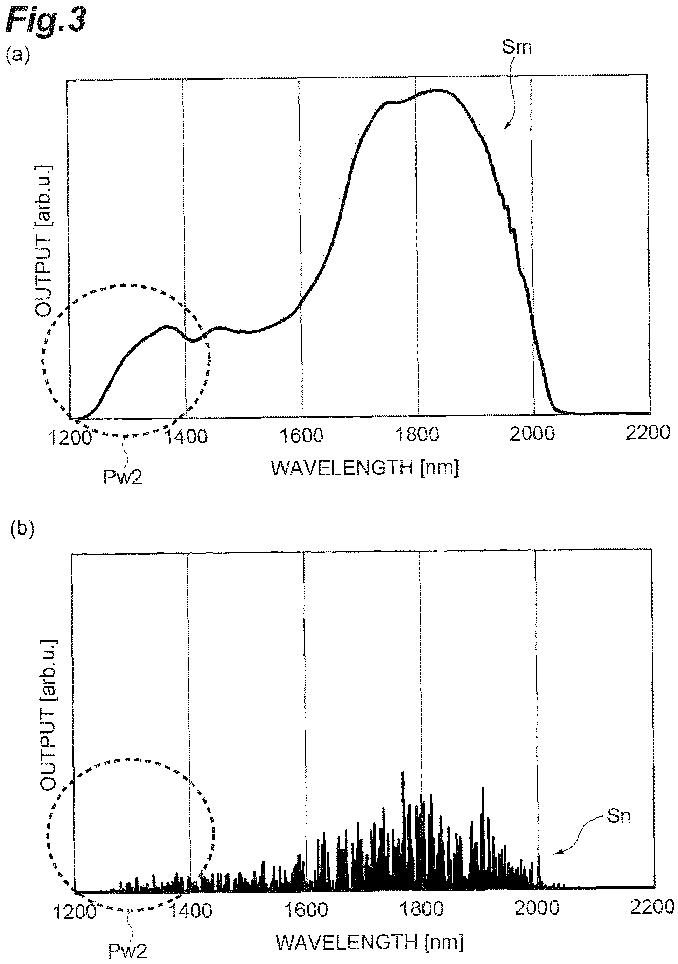

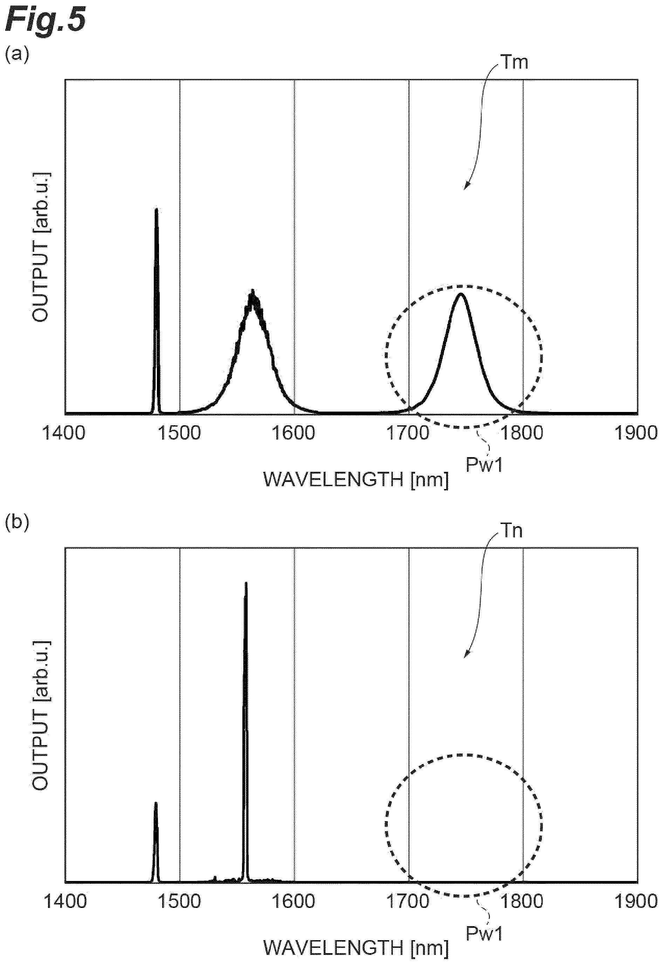

Note that a long-pass filter (LPF) 62 is interposed between the wavelength shift fiber 30 and the highly non-linear fiber 41. The long-pass filter 62 transmits light in a partial wavelength band on a long wavelength side (for example, 1650 nm or more) of the pulsed light output from the wavelength shift fiber 30. As an example, as illustrated in (a) of FIG. 5, the long-pass filter 62 transmits a partial wavelength band Pw1 corresponding to a soliton pulse generated in the wavelength shift fiber 30. Therefore, the highly non-linear fiber 41 receives the soliton pulse via the long-pass filter 62, converts the soliton pulse into super continuum light, and outputs the super continuum light. Note that (a) of FIG. 3 illustrates an example of a spectrum Sm (at the time of mode lock) of the super continuum light output from the highly non-linear fiber 41.

The light detection element 50 is, for example, a photodiode. The light detection element 50 is for detecting, in the output fiber 40, the pulsed light having passed through at least the wavelength shift fiber 30. In the present embodiment, the light detection element 50 is disposed so as to face the fusion splice portion 43 between the highly non-linear fiber 41 and the optical fiber 42 in the output fiber 40, and detects light leaking from the fusion splice portion 43. Therefore, here, the light detection element 50 can detect the pulsed light (super continuum light) that has passed through the highly non-linear fiber 41 in addition to the wavelength shift fiber 30.

The light detection element 50 is electrically connected to the control unit 60, and an output signal of the light detection element 50 is transmitted to the control unit 60. As a result, the control unit 60 can acquire an output value of the light detection element 50. A short-pass filter 61 is provided between the light detection element 50 and the fusion splice portion 43 (high non-linear fiber 41). As illustrated in (a) of FIG. 3, the short-pass filter 61 transmits a partial wavelength band Pw2 on a short-wavelength side (for example, 1400 nm or less) of the pulsed light that has passed through the highly non-linear fiber 41, and causes the light to enter the light detection element 50.

The pulsed light having passed through the highly non-linear fiber 41 is generated from the soliton pulse generated in the wavelength shift fiber 30 and transmitted through the long-pass filter 62. In other words, the partial wavelength band Pw2 incident on the light detection element 50 by the short-pass filter 61 includes a wavelength component caused by the wavelength band Pw1 (corresponding to the soliton pulse) generated by passing through the wavelength shift fiber 30. As described above, the short-pass filter 61 and the long-pass filter 62 function as filters provided between the wavelength shift fiber 30 and the light detection element 50 such that light in the partial wavelength band Pw2 of the pulsed light having passed through the wavelength shift fiber 30 enters the light detection element 50. In other words, in the present embodiment, the light detection element 50 detects light in the partial wavelength band Pw2 of the pulsed light having passed through the wavelength shift fiber 30.

The control unit 60 includes a processing unit, a storage unit, an input/output unit, and the like. The processing unit includes a board including a microcomputer including a processor, a memory, and the like. The processing unit executes a program written in a storage unit in the microcomputer. The control unit 60 controls a drive current of the excitation light source 2b in the fiber laser 10 based on the output value of the light detection element 50.

Here, according to the present inventors, currently, in a case where the fiber laser 10 includes a CNT sheet as the saturable absorber 3, consideration is being made on enabling a unit (for example, a structure including the optical fibers 3a and 3b and the saturable absorber 3) including the CNT sheet to be replaced on the user side.

However, since an LD current value at which the mode lock occurs varies for each CNT sheet, in a case where the CNT sheet is replaced, for example, it is necessary to adjust the LD current value while measuring a spectrum of output light. However, for this purpose, an expensive device such as a spectrum analyzer is required, and it is difficult for the user side to perform this.

Also in the present embodiment, when the unit including the saturable absorber 3 is replaced, the drive current of the excitation light source 2b to which the mode lock is applied in the fiber laser 10 may change. Therefore, even if the excitation light source 2b is driven with a constant drive current before and after replacement, the mode lock may not be applied. (a) of FIG. 3 is a diagram illustrating a spectrum Sm of the light output from the output fiber 40 during the mode lock, and (b) of FIG. 3 is a diagram illustrating a spectrum Sn of the light output from the output fiber 40 during the non-mode lock.

As illustrated in FIG. 3, the shape of the spectrum of the output light is entirely different between a mode lock state and a non-mode lock state (mode lock unstable state). However, since the power of the whole is substantially the same, it is difficult to determine the shape of the spectrum using the output value of the light detection element 50. On the other hand, when the light incident on the light detection element 50 is limited to a partial wavelength band, the change in the output value of the light detection element 50 can be detected between the mode lock state and the non-mode lock state. As an example, in the partial wavelength band Pw2 on the relatively short wavelength side (for example, 1400 nm or less) of the pulsed light having passed through the wavelength shift fiber 30 and the highly non-linear fiber 41, the intensity change between the mode lock state and the non-mode lock state is remarkable. Specifically, in the wavelength band Pw2, the intensity is significantly lower in the non-mode lock state than in the mode lock state.

As described above, in the light source device 1 according to the present embodiment, the filter is provided such that the partial wavelength band Pw2 is incident on the light detection element 50. Therefore, in the light source device 1 according to the present embodiment, the control unit 60 can adjust the drive current of the excitation light source 2b so that the mode lock occurs in the fiber laser 10 using the output value of the light detection element 50 when the wavelength band Pw2 is detected. Subsequently, a method of adjusting the drive current of the excitation light source 2b will be described.

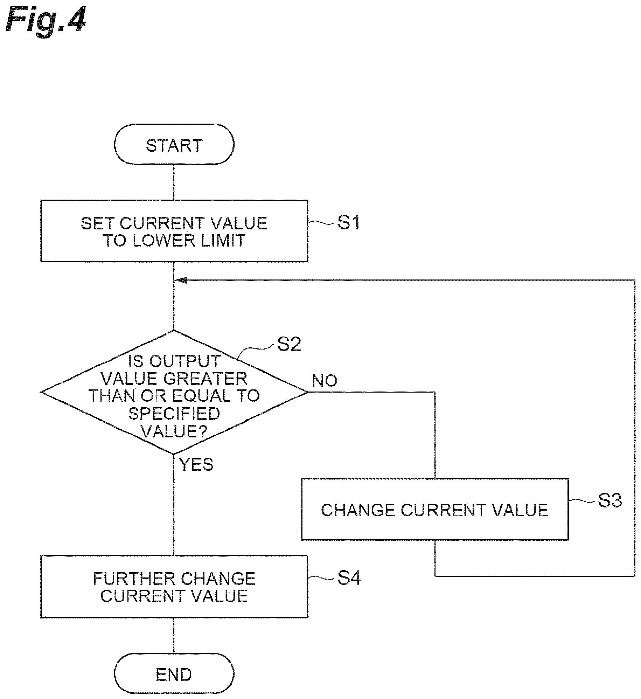

FIG. 4 is a flowchart illustrating one step of a drive current adjustment method according to the present embodiment. In this method, first, the control unit 60 sets the drive current of the excitation light source 2b to a lower limit value (step S1: acquisition processing). Subsequently, the control unit 60 determines whether or not the output value of the light detection element 50 is greater than or equal to a specified value (step S2: acquisition processing). Here, since the drive current is set to the lower limit value in step S1, pulsed light according to the excitation light from the excitation light source 2b driven with the lower limit drive current is output from the fiber laser 10. As a result, the wavelength band Pw2 of a part of the output light according to the pulsed light is incident on the light detection element 50.

As a result of the determination in step S2, in a case where the output value of the light detection element 50 is less than the specified value (step S2: No), the control unit 60 increases the drive current of the excitation light source 2b (for example, about 1 mA) (step S3: acquisition processing). As a result, pulsed light according to the excitation light from the excitation light source 2b driven with the increased current value is output from the fiber laser 10. As a result, the wavelength band Pw2 of a part of the output light according to the pulsed light is incident on the light detection element 50.

In the subsequent step, the control unit 60 again determines whether or not the output value of the light detection element 50 is greater than or equal to the specified value (step S2: acquisition processing). As a result of the determination in step S2, in a case where the output value of the light detection element 50 is less than the specified value (step S2: No), the control unit 60 increases the drive current of the excitation light source 2b again (step S3: acquisition processing). As described above, the control unit 60 repeatedly performs steps S2 and S3 until the output value of the light detection element 50 becomes greater than or equal to the specified value. As a result, the control unit 60 can acquire a value of the drive current of the excitation light source 2b at which the output value of the light detection element 50 is greater than or equal to the specified value.

That is, the control unit 60 executes the acquisition processing of acquiring a specified current value of the drive current of the excitation light source 2b at which the output value of the light detection element 50 is greater than or equal to the specified value by changing the drive current of the excitation light source 2b in an increasing direction according to the output value of the light detection element 50.

Thereafter, as a result of the determination in step S2, in a case where the output value of the light detection element 50 is greater than or equal to the specified value (step S2: YES), the control unit 60 further increases the drive current of the excitation light source 2b from the specified current value (step S4: setting processing). This is because, in the fiber laser 10, the mode lock occurs in a certain range of the drive current of the excitation light source 2b, but since the specified current value obtained by repeating steps S2 and S3 is a lower limit value of the certain range, the mode lock is more stably generated by further increasing the drive current. Note that the value increased at this time can be a value (for example, about several tens of mA) that is about half a range of the drive current of the excitation light source 2b in which the mode lock occurs. Thus, the drive current of the excitation light source 2b is set.

As described above, after the acquisition processing, the control unit 60 further changes the drive current of the excitation light source 2b in one direction (increasing direction) from the specified current value, and executes the setting processing of setting the changed current value as the drive current of the excitation light source 2b.

As described above, in the light source device 1 according to the present embodiment, the pulsed light generated according to the excitation light from the excitation light source 2b is output from the fiber laser 10, amplified by the fiber amplifier 20, and then input to the wavelength shift fiber 30. The pulsed light input to the wavelength shift fiber 30 is output from the output fiber 40 after being subjected to the wavelength shift. Therefore, it is also conceivable that the mode lock can be generated by adjusting the drive current of the excitation light source 2b while measuring the spectrum of the light output from the output fiber 40. However, the measurement of the spectrum is not necessarily easy.

On the other hand, in the light source device 1 according to the present embodiment, the light detection element 50 for detecting the pulsed light having passed through at least the wavelength shift fiber 30 detects light of the partial wavelength band Pw2 of the pulsed light having passed through the wavelength shift fiber 30. Therefore, in the light detection element 50, an output signal according to the light of the partial wavelength band Pw2 of the light subjected to the wavelength shift is generated. In a case where the entire spectrum of the light is input, the output signal of the light detection element 50 does not change depending on whether or not the mode lock occurs in the fiber laser 10. However, when the output signal is limited to the partial wavelength band Pw2, the output value changes depending on whether or not the mode lock occurs in the fiber laser 10.

Therefore, the control unit 60 changes the drive current of the excitation light source 2b according to the output value of the light detection element 50, and executes the acquisition processing of acquiring the specified current value of the excitation light source 2b at which the output value of the light detection element 50 is greater than or equal to the specified value, whereby the excitation light source 2b can be driven with the specified current value. This makes it possible to cause the mode lock in the fiber laser 10. As described above, according to the light source device 1, the excitation light source 2b can be adjusted so that the mode lock occurs without measuring the spectrum.

In the light source device 1 according to the present embodiment, the light of the partial wavelength band Pw2 includes a wavelength component caused by the wavelength band Pw1 (corresponding to the soliton pulse) generated in the pulsed light by passing through the wavelength shift fiber 30. As described above, the intensity of the light of the partial wavelength band Pw1 generated in the wavelength shift fiber 30 is likely to change depending on whether or not the mode lock occurs. Therefore, by detecting the light (the light of the wavelength band Pw2) of the wavelength component caused by the wavelength band Pw1 by the light detection element 50, it is possible to more reliably acquire the specified current value of the excitation light source 2b in which the mode lock occurs.

In the light source device 1 according to the present embodiment, after the acquisition processing, the control unit 60 executes setting processing of further changing the current value of the excitation light source 2b in one direction from the specified current value and setting the current value as the drive current of the excitation light source 2b. Therefore, it is possible to more stably generate the mode lock in the fiber laser 10.

In the light source device 1 according to the present embodiment, in the acquisition processing, the control unit 60 changes the drive current of the excitation light source 2b so as to increase the drive current from the lower limit value according to the output value of the light detection element 50. Therefore, driving of the excitation light source 2b with an unnecessarily large drive current can be avoided. As a result, in a case where the fiber laser 10 includes, for example, a CNT sheet, wear of the CNT sheet is suppressed.

In the light source device 1 according to the present embodiment, the light detection element 50 is disposed to detect the pulsed light output from the output fiber 40. In particular, the light source device 1 includes the filters (the long-pass filter 62 and the short-pass filter 61) that cause light in the partial wavelength band Pw2 of the pulsed light having passed through the wavelength shift fiber 30 to enter the light detection element 50. The output fiber 40 includes the highly non-linear fiber 41, and the filter includes the short-pass filter 61 provided between the highly non-linear fiber 41 and the light detection element 50 so that light in the partial wavelength band Pw2 on a short wavelength side of the pulsed light having passed through the highly non-linear fiber 41 enters the light detection element 50. As described above, in the light having passed through the highly non-linear fiber 41, the intensity of the light in the partial wavelength band Pw2 on the short wavelength side is likely to change depending on whether or not the mode lock occurs in the fiber laser 10. Therefore, in this case, it is possible to easily and reliably determine whether or not the mode lock occurs and to more reliably acquire the specified current value of the excitation light source 2b by detecting a part of the light on the short wavelength side having passed through the highly non-linear fiber 41 by the light detection element 50 via the short-pass filter 61.

### [Second Embodiment]

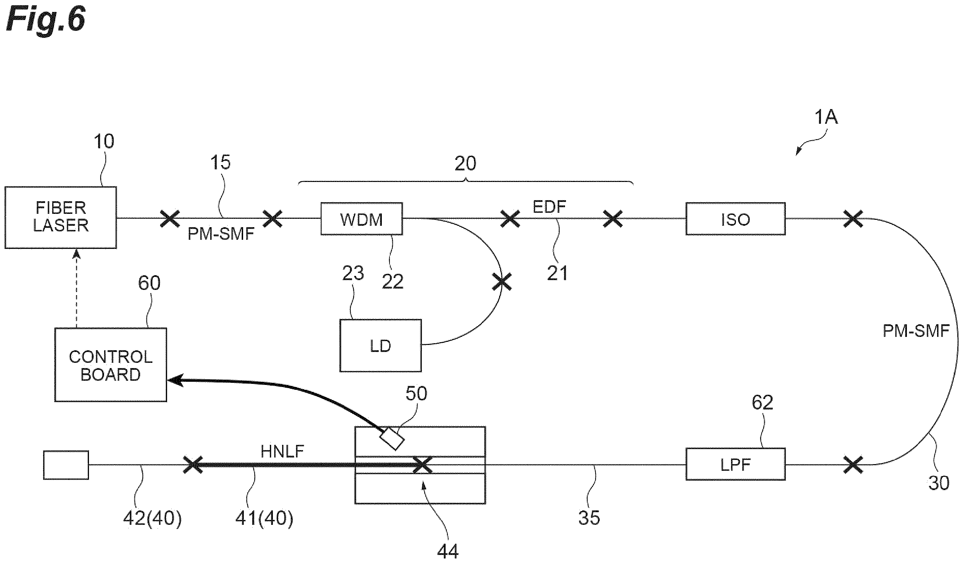

FIG. 6 is a schematic diagram illustrating a light source device according to a second embodiment. As illustrated in FIG. 6, a light source device 1A according to the second embodiment is different from the light source device 1 according to the first embodiment in that the light source device 1A does not include a short-pass filter 61 and that the light source device 1A is different from the light source device 1 in an arrangement of a light detection element 50, and the light source device 1A according to the second embodiment is identical to the light source device 1 in other points.

In the light source device 1A, in order to detect the pulsed light having passed through at least a wavelength shift fiber 30 in an output fiber 40, the light detection element 50 is disposed so as to face a fusion splice portion 44 between an optical fiber 35 connecting a long-pass filter 62 and the output fiber 40 and a highly non-linear fiber 41. The light detection element 50 detects leak light from the fusion splice portion 44. As a result, the light detection element 50 is disposed to detect the pulsed light input to the output fiber 40 (highly non-linear fiber 41), that is, the pulsed light that has not passed through the highly non-linear fiber 41. No filter is interposed between the light detection element 50 and the fusion splice portion 44.

Therefore, as illustrated in FIG. 5, the light detected by the light detection element 50 is light of the partial wavelength band Pw1 corresponding to the soliton pulse generated by passing through the wavelength shift fiber 30. That is, in the present embodiment, the filter includes only the long-pass filter 62 provided between the wavelength shift fiber 30 and the light detection element 50 such that light in the partial wavelength band Pw1 on the long wavelength side of the pulsed light having passed through the wavelength shift fiber 30 enters the light detection element 50. In other words, in the present embodiment, the light detection element 50 detects the light of the partial wavelength band Pw1 of the pulsed light having passed through the wavelength shift fiber 30.

(a) of FIG. 5 illustrates a spectrum Tm during the mode lock, and (b) of FIG. 5 illustrates a spectrum Tn during the non-mode lock. As illustrated in FIG. 5, in the light before being input to the output fiber 40 (highly non-linear fiber 41) via the wavelength shift fiber 30, the intensity of the light in the partial wavelength band Pw1 on the relatively long wavelength side (for example, 1650 nm or more) is likely to change depending on whether or not the mode lock occurs in the fiber laser 10.

Therefore, in this case, the partial wavelength band Pw1 on the long wavelength side of the light having passed through the wavelength shift fiber 30 is detected by the light detection element 50 via the long-pass filter 62. As a result, it is possible to easily and reliably determine whether or not the mode lock occurs on the basis of the output value of the light detection element 50 and to adjust the drive current of the excitation light source 2b of the fiber laser 10 by the adjustment method similar to that of the first embodiment. As described above, a detection target of the light detection element 50 is not limited to the super continuum light, and may be a soliton pulse before being converted into the super continuum light as in the present embodiment.

### [Third Embodiment]

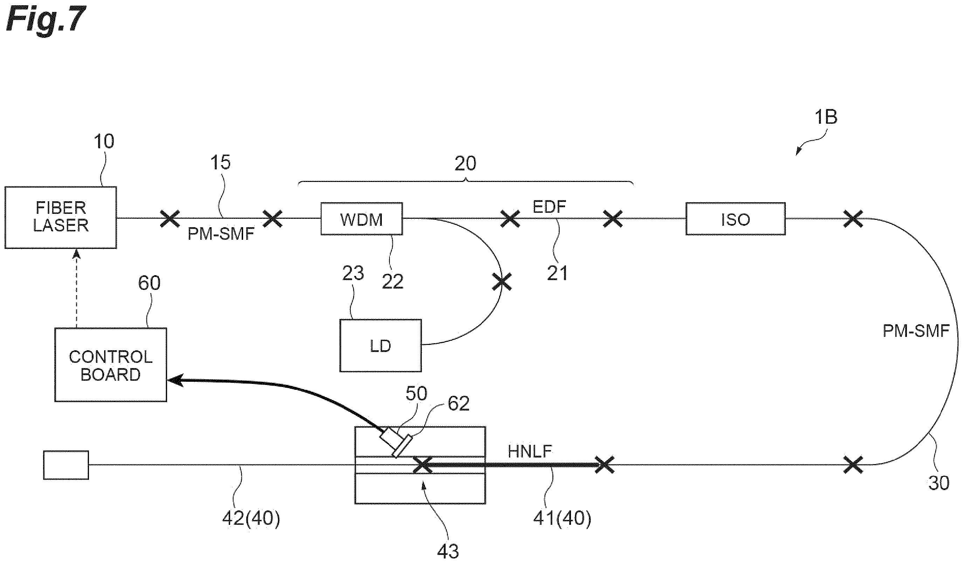

FIG. 7 is a schematic diagram illustrating a light source device according to a third embodiment. As illustrated in FIG. 7, a light source device 1B according to the third embodiment is different from the light source device 1 according to the first embodiment in that the light source device 1B does not include a short-pass filter 61 and that the light source device 1B is different from the light source device 1 in an arrangement of a long-pass filter 62, and the light source device 1B according to the third embodiment is identical to the light source device 1 in other points.

In the light source device 1B, the long-pass filter 62 is not interposed in a path of the output light including an output fiber 40 from a wavelength shift fiber 30, but is interposed between a highly non-linear fiber 41 (fusion splice portion 43) and a light detection element 50. Furthermore, the short-pass filter 61 is not interposed in a preceding stage of the light detection element 50. Therefore, also in the present embodiment, the light detected by the light detection element 50 is light of the partial wavelength band Pw1 corresponding to the soliton pulse generated by passing through the wavelength shift fiber 30. As a result, also in the light source device 1B according to the present embodiment, it is possible to easily and reliably determine whether or not the mode lock occurs on the basis of the output value of the light detection element 50 and to adjust the drive current of the excitation light source 2b of the fiber laser 10 by the adjustment method similar to that of the first embodiment.

### [Fourth Embodiment]

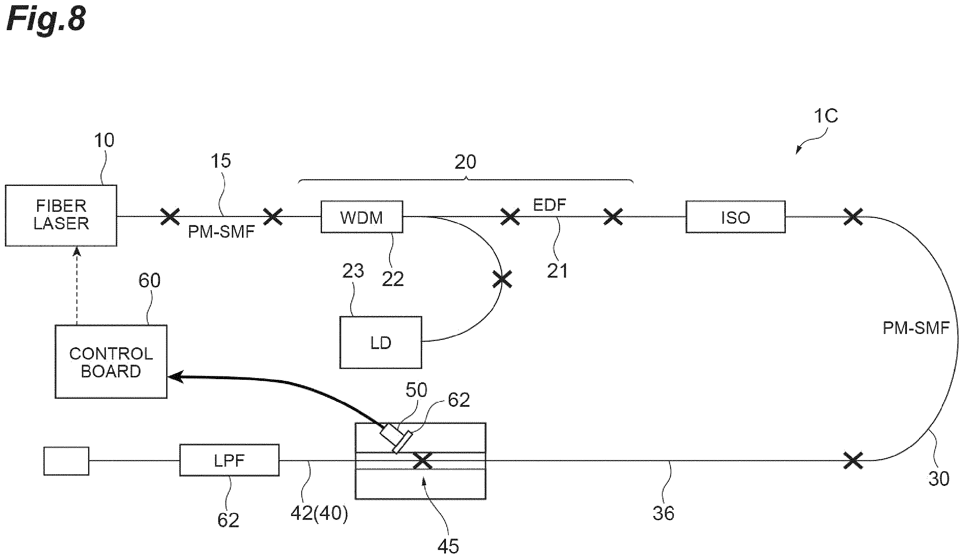

FIG. 8 is a schematic diagram illustrating a light source device according to a fourth embodiment. As illustrated in FIG. 8, a light source device 1C according to the fourth embodiment is different from the light source device 1 according to the first embodiment in that the light source device 1C does not include a short-pass filter 61, that an output fiber 40 does not include a highly non-linear fiber 41, and that the light source device 1C is different from the light source device 1 in an arrangement of a long-pass filter 62, and the light source device 1C is identical to the light source device 1 in other points.

In the light source device 1C, a light detection element 50 is disposed so as to face a fusion splice portion 45 between an optical fiber 36 connecting a wavelength shift fiber 30 and the output fiber 40 (an optical fiber 42) and the optical fiber 42. The light detection element 50 detects leak light from the fusion splice portion 45. The long-pass filter 62 is interposed between the light detection element 50 and the fusion splice portion 45. Therefore, also in the present embodiment, the light detected by the light detection element 50 is light of the partial wavelength band Pw1 corresponding to the soliton pulse generated by passing through the wavelength shift fiber 30. As a result, also in the light source device 1C according to the present embodiment, it is possible to easily and reliably determine whether or not the mode lock occurs on the basis of the output value of the light detection element 50 and to adjust the drive current of the excitation light source 2b of the fiber laser 10 by the adjustment method similar to that of the first embodiment.

Furthermore, in the light source device 1C, another long-pass filter 62 is provided for the optical fiber 42. On the other hand, in the light source device 1C, the highly non-linear fiber 41 is not interposed in a path of the output light including the output fiber 40 from the wavelength shift fiber 30. Therefore, the output light (at the time of mode lock) from the light source device 1C becomes a soliton pulse of the partial wavelength band Pw1 on the long wavelength side (for example, 1650 nm or more) by cutting the short wavelength side by the long-pass filter 62 from the pulsed light having the spectrum Tm illustrated in (a) of FIG. 5 instead of the super continuum light as illustrated in (a) of FIG. 3. As described above, the light source devices 1 to 1C can output various types of output light.

The above embodiments describe one aspect of the present disclosure. Therefore, the light source device according to the present disclosure may be any modification of the light source devices 1 to 1C described above.

For example, in the first embodiment, an example has been described in which the control unit 60 sets the drive current of the excitation light source 2b to the lower limit value in step S 1, and acquires the specified current value while increasing the drive current of the excitation light source 2b in step S3. However, the control unit 60 may set the drive current of the excitation light source 2b to be sufficiently high in step S1, and acquire the specified current value while decreasing the drive current of the excitation light source 2b in step S3.

In this case, since the specified current value is acquired as an upper limit value of a range of the drive current in which the mode lock of the excitation light source 2b occurs, in step S4, the drive current of the excitation light source 2b may be further decreased (to the same extent as in the case of increasing) from the specified current value. As described above, in the acquisition processing, the control unit 60 changes the drive current of the excitation light source 2b in one direction according to the output value of the light detection element 50, so that it is possible to acquire the specified current value of the drive current at which the output value of the light detection element 50 is greater than or equal to the specified value.

Furthermore, in the above embodiments, each of the light detection elements 50 is disposed so as to face the fusion splice portion between the optical fibers, and is configured to detect light leaking from the fusion splice portion. However, the light detection element 50 may be configured to detect light branched by an optical coupler provided on each path of the light source devices 1 to 1C.

Moreover, the control unit 60 may further have a function of detecting extinguishment of the output light (super continuum light, soliton pulse) on the basis of the output signal from the light detection element 50 and detecting/notifying an error.

### Industrial Applicability

It is possible to provide a light source device capable of adjusting an excitation light source so that a mode lock occurs without measuring a spectrum.

### Reference Signs List

- 1, 1A, 1B, 1C: light source device
- 2b: excitation light source
- 10: fiber laser
- 20: fiber amplifier
- 30: wavelength shift fiber
- 40: output fiber
- 41: highly non-linear fiber (non-linear fiber)
- 50: light detection element
- 60: control unit
- 61: short-pass filter (filter)
- 62: long-pass filter (filter).

## Claims

1. Alight source device comprising:
a fiber laser including an excitation light source and configured to output pulsed light generated according to excitation light from the excitation light source;
a fiber amplifier configured to receive the pulsed light output from the fiber laser, amplify the pulsed light, and output the amplified pulsed light;
a wavelength shift fiber configured to receive the pulsed light output from the fiber amplifier, shift a wavelength of the pulsed light, and output the pulsed light;
an output fiber configured to receive the pulsed light output from the wavelength shift fiber, and output the pulsed light to an outside;
a light detection element configured to detect, in the output fiber, the pulsed light having passed through at least the wavelength shift fiber; and
a control unit configured to control a drive current of the excitation light source,
wherein the light detection element detects light in a partial wavelength band of the pulsed light having passed through the wavelength shift fiber, and
the control unit executes, by changing the drive current of the excitation light source in one direction according to an output value of the light detection element, acquisition processing of acquiring a specified current value of the drive current at which the output value of the light detection element is greater than or equal to a specified value.

2. The light source device according to claim 1, wherein
the light in the partial wavelength band includes a wavelength component caused by a wavelength band generated in the pulsed light by passing through the wavelength shift fiber.

3. The light source device according to claim 1 or 2, wherein
the control unit executes, after the acquisition processing, setting processing of further changing the current value of the excitation light source from the specified current value in the one direction and setting the drive current as the drive current of the excitation light source.

4. The light source device according to any one of claims 1 to 3, wherein
the control unit, in the acquisition processing, changes the drive current of the excitation light source so as to increase the drive current from a lower limit value according to the output value of the light detection element.

5. The light source device according to any one of claims 1 to 4, wherein
the light detection element is disposed to detect the pulsed light output from the output fiber.

6. The light source device according to claim 5, further comprising
a filter provided between the wavelength shift fiber and the light detection element so that the light in the partial wavelength band enters the light detection element,
wherein the output fiber includes a non-linear fiber, and
the filter includes a short-pass filter provided between the non-linear fiber and the light detection element so that the light in the partial wavelength band on a short wavelength side of the pulsed light having passed through the non-linear fiber enters the light detection element.

7. The light source device according to any one of claims 1 to 4, wherein
the light detection element is disposed to detect the pulsed light input to the output fiber.

8. The light source device according to claim 7, further comprising
a filter provided between the wavelength shift fiber and the light detection element so that the light in the partial wavelength band enters the light detection element,
wherein the filter includes a long-pass filter provided between the wavelength shift fiber and the light detection element so that the light in the partial wavelength band on a long wavelength side of the pulsed light having passed through the wavelength shift fiber enters the light detection element.
